# EUROPÄISCHE PATENTANMELDUNG

(11) **EP 1 640 055 A1**
(43) Veröffentlichungstag der Anmeldung: **29.03.2006**
(21) Anmeldenummer: 05019602.1
(22) Anmeldetag: 09.09.2005
(51) Int. Cl.: B01D 46/52

(54) **Anordnung für ein plattenförmiges Filterelement in einem Gasfiltergehäuse**

(30) Priorität: 27.09.2004 DE 102004047126; 09.11.2004 DE 102004054246
(71) Anmelder: Carl Freudenberg KG, 69469 Weinheim (DE)
(72) Erfinder: Stahl, Ulrich, 69514 Laudenbach (DE); Felber, Uwe, 69518 Abtsteinach (DE); Krüger, Jörn-Uwe, 51597 Morsbach (DE)

(57) **Zusammenfassung**

Die Erfindung betrifft eine Anordnung für eine plattenförmiges Filterelement (2) in einem Gasfiltergehäuse (1), wobei das Filterelement (2) aus zick-zackförmig gefaltetem Filtermaterial (3) mit an den Stirnkanten verschlossenen Filterfalten besteht, und der Verschluss (4) im wesentlichen aus dem gleichen Filtermaterial ist, welches die Filterfalten bildet, und einen beidseitig nach außen kragenden Randbereich (5) aufweist, und bei dem die beiden Randbereiche (5) zur Abtrennung eines stromabwärts liegenden Reinraumes (6) in das Gehäuse (1) eines Gasfilters dichtend eingesetzt sind, wobei das Gehäuse (1) an den den Faltenenden des plattenförmigen Filterelements (2) zugeordneten Seiten Einsteckschwerter (7) besitzt, die in die Endfalten (8) eingreifen und eine Leckluftrate von 0 bis 4 m³/h bei einem Differenzdruck von mindestens 200 Pa gewährleisten.

## Beschreibung

Die Erfindung betrifft eine Anordnung für ein plattenförmiges Filterelement in einem Gasfiltergehäuse, wobei das Filterelement aus einem zick-zack-förmig faltigem Filtermaterial mit an den Stirnkanten verschlossenen Filterfalten besteht, und der Verschluss im Wesentlichen aus dem gleichen Material ist, welches die Filterfalten bildet, und einen beidseitig nach außen kragenden Randbereich aufweist.

Aus der EP 0 490 169 B2 ist ein plattenförmiger Filtereinsatz für Gasfilter bekannt, der aus zick-zack-förmig gefaltetem Bahnenmaterial mit an den Stirnkanten verschlossenen Filterfalten besteht. Dieser Filtereinsatz besitzt Rahmenteile, die an den von den Faltenstirnkanten gebildeten Seitenbereichen des Filtereinsatzes auf die Faltenrücken aufgeklebt oder aufgeschweißt sind und den plattenförmigen Filtereinsatz nach allen vier Seiten überragen, um mit diesem überkragenden Bereich dicht in das Gehäuse eines Gasfilters einspannbar zu sein. Der Rahmen und die Filterbahn können dabei aus dem gleichen oder zumindest zusammensetzungsmäßig gleichartigen Material bestehen. Nachteilig erweist sich dabei, dass entweder ein vorgefertigter streifenförmiger Rahmen oder einzelne zu einem Rahmen zusammenfügbare vorgefertigte streifenförmige Rahmenteile an dem zick-zack-förmig gefalteten Bahnenmaterial zu befestigen sind.

Aus dem Dokument DE 195 32 436 C1 ist ein Filtereinsatz und ein Verfahren zu seiner Herstellung bekannt, bei dem ein Faltenpack aus einem thermoplastisch verschweißbaren Vliesstoff zumindest längs entlang seiner beiden Außenseiten mit jeweils zumindest einer Dichtung verbunden ist. Die Dichtung, die aus einem thermoplastisch verschweißbaren Werkstoff besteht, ist mit einem den Filtereinsatz umschließenden Filtergehäuse dichtend in Eingriff bringbar. Dies erfolgt in der Weise, dass die Dichtstreifen einen V-förmig gefalteten Querschnitt aufweisen von denen der erste Schenkel mit dem Faltenpack dichtend verbunden ist und der zweite Schenkel durch seine elastische Vorspannung dichtend an das Filtergehäuse anliegt. Eine solche Anordnung, die im Automobilinnenfilterbereich eingesetzt wird, erreicht nicht die für den Motorzuluftbereich geforderten geringen Leckluftraten, die um den Faktor 3 unter den Anforderungen an die Leckluftrate für Automobilinnenfilter liegen.

Die Erfindung hat sich die Aufgabe gestellt, eine Anordnung für ein plattenförmiges Filterelement in einem Gasfiltergehäuse anzugeben, die eine Leckluftrate von < 5m³/h bei einem Differenzdruck von mind. 200 Pa gewährleistet. Die Erfindung stellt sich weiterhin die Aufgabe, ein Filterelement zur Benutzung in der erfindungsgemäßen Anordnung anzugeben.

Erfindungsgemäß wird die Aufgabe durch eine gattungsgemäß angegebene Anordnung gelöst, bei der die beiden Randbereiche des aus zick-zack-förmig gefalteten Filtermaterial bestehenden Filterelements, welches an den Stirnkanten verschlossen ist, zur Abtrennung eines stromabwärts liegenden Reinraumes in das Gehäuses eines Gasfilters dichtend eingesetzt sind und bei dem das Gehäuse an den den Faltenenden des plattenförmigen Filterelements zugeordneten Seiten Einsteckschwerter besitzt, welche in die Endfalten eingreifen und eine Leckluftrate von 0 - 4 m³/h bei einem Differenzdruck von mind. 200 Pa gewährleisten. Überraschenderweise ist es durch die vorgeschlagene Anordnung möglich, ein an sich für die Innenraumbelüftung bekanntes Filterelement für die Motorzuluftfiltration einzusetzen. Die erfindungsgemäße Abdichtung an den Stirnseiten des Filterelements durch den Eingriff von Einstecklaschen in die Faltenenden des Plattenfilterelements gewährleistet die geforderte Leckluftrate von < 5m³/h bei einem Differenzdruck von mindestens 200 Pa.

Vorzugsweise wird bei der erfindungsgemäßen Anordnung ein Filterelement aus einem Filtermaterial eingesetzt, welches hinsichtlich seiner beiden Hauptseiten eine unterschiedliche Porosität besitzt und so angeordnet wird, dass die offenporigere Seite zur Anströmseite zeigt. Die entsprechende Anordnung sichert auch bei großen Staubbelastungen den Aufbau einer porösen Filterkuchenschicht und damit einer hohen Filterleistung.

Ein Filterelement zur Benutzung in der erfindungsgemäßen Anordnung ist erfindungsgemäß eines, bei dem das als Verschluss der Stirnkanten eingesetzte Material aus dem gleichen Material wie das zick-zack-förmig gefaltete Filtermaterial besteht. Das zum Verschluss der Stirnkanten und zur seitlichen Abdichtung dienende Material gewährleistet somit die gleiche Filtrierleistung wie das die Hauptfläche des Filterelements ausmachende Filtermaterial.

Besonders bevorzugt zur Benutzung in der erfindungsgemäßen Anordnung ist ein Filterelement, bei dem das eingesetzte Filtermaterial aus einseitig durch Fluid-Hochdruckstrahlen verfestigten Filtermaterial besteht. Dieses Material weist hinsichtlich seiner beiden Hauptseiten eine unterschiedliche Porosität auf und gewährleistet eine hohe Standzeit des Filterelements.

Besonders bevorzugt zur Benutzung in einer erfindungsgemäßen Anordnung ist ein Filterelement, bei dem das zum Verschluss der Stirnkanten eingesetzte Material mit der durch Fluid-Hochdruckstrahlen verfestigten Seite an die Stirnkanten der Filterkanten befestigt ist und bei dem die beidseitig nach außen kragenden Randbereiche sich etwa in Höhe der durch die Faltenrücken aufgespannten Ebene erstrecken, die durch die Fluid-Hochdruckstrahlen verfestigte Seite des Filtermaterials gebildet wird. Hinsichtlich des Filtermaterials wird damit an allen Stellen des Filters die gleiche Filterwirkung erzielt.

Die Erfindung wird nachfolgend an Hand von zwei Figuren näher erläutert.

Es zeigen:
- Figur 1: den Längsschnitt durch eine erfindungsgemäße Anordnung in Faltungsrichtung des zick-zack-förmig gefalteten Filtermaterials
- Figur 2: den Schnitt durch eine erfindungsgemäße Anordnung in quer zur Faltungsrichtung des zick-zack-förmig gefalteten Filtermaterials

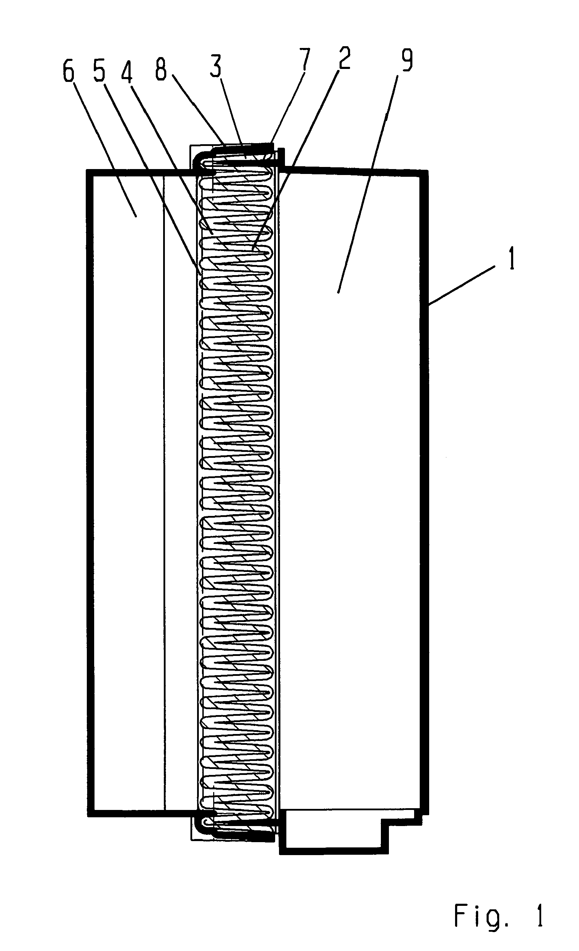

Figur 1 zeigt das in einem Gehäuse **1** angeordnete plattenförmige Filterelement **2.** Das Filterelement **2** besteht aus einem zick-zack-förmig gefalteten Filtermaterial **3,** das an den Stirnkanten mit einem Verschluss **4** aus im wesentlichen gleichen Filtermaterial versehen ist. Dieser Verschluss 4 weist nach außen kragende Randbereiche **5** auf, die zur Abtrennung des stromabwärts liegenden Reinraumes **6** in das Gehäuse **1** dichtend eingesetzt sind. Das Gehäuse **1** besitzt an den den Faltenenden **8** des plattenförmige Filterelements **2** zugeordneten Seiten Einsteckschwerter **7,** die in die Faltenenden **8** des plattenförmige Filterelements **2** eingreifen. In Zusammenwirken mit einer entsprechenden Aufnahme wird eine Leckluftrate von 0 bis 4 m³/h bei einem Differenzdruck von 200 Pa erzielt.

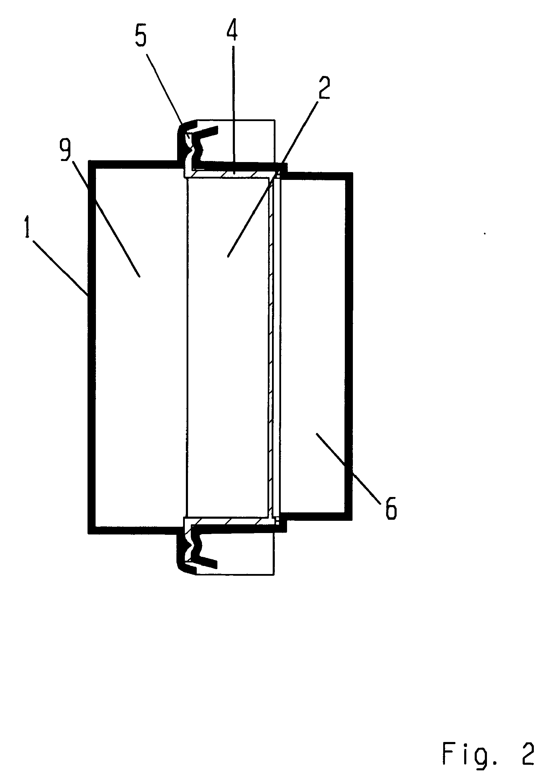

Figur 2 zeigt den Schnitt durch eine erfindungsgemäße Anordnung in quer zur Faltungsrichtung des aus zick-zack-förmig gefalteten Filtermaterial **3** bestehenden Filterelements **2.** Der Verschluss **4** der Stirnkanten des zick-zack-förmig gefalteten Filtermaterials **3** weist nach außen kragende Randbereiche **5** auf, die zur Abtrennung des stromabwärts liegenden Reinraumes **6** von der Anströmseite **9** in das Gehäuse **1** dichtend in wirkschlüssig geformte Randbereiche des Gehäuses **1** eingesetzt sind.

## Patentansprüche

1. Anordnung für eine plattenförmiges Filterelement (2) in einem Gasfiltergehäuse (1), wobei das Filterelement (2) aus zick-zack-förmig gefalteten Filtermaterial (3) mit an den Stirnkanten verschlossenen Filterfalten besteht, und der Verschluss (4) im wesentlichen aus dem gleichen Filtermaterial ist, welches die Filterfalten bildet, und einen beidseitig nach außen kragenden Randbereich (5) aufweist, **dadurch gekennzeichnet, dass** die beiden Randbereiche (5) zur Abtrennung eines stromabwärts liegenden Reinraumes (6) in das Gehäuse (1) eines Gasfilters dichtend eingesetzt sind, und wobei das Gehäuse (1) an den den Faltenenden des plattenförmigen Filterelements (2) zugeordneten Seiten Einsteckschwerter (7) besitzt, die in die Endfalten (8) eingreifen und eine Leckluftrate von 0 bis 4 m³/h bei einem Differenzdruck von mindestens 200 Pa gewährleistet ist.

2. Anordnung nach Anspruch 1, **dadurch gekennzeichnet, dass** das Filterelement (2) aus einem Filtermaterial (3) besteht, welches hinsichtlich seiner beiden Hauptseiten eine unterschiedliche Porosität besitzt und so angeordnet ist, dass die offenporigere Seite zur Anströmseite (9) zeigt.

3. Filterelement (2) zur Benutzung in einer Anordnung nach Anspruch 1 oder 2, **dadurch gekennzeichnet, dass** das als Verschluss (4) der Stirnkanten eingesetzte Material aus dem gleichen Material wie das zick-zack-förmig gefaltete Filtermaterial (3) besteht.

4. Filterelement (2) nach Anspruch 3, **dadurch gekennzeichnet, dass** das eingesetzte Filtermaterial (3) aus einseitig durch Fluid-Hochdruckstrahlen verfestigtem Filtermaterial besteht.

5. Filterelement (2) nach Anspruch 4, **dadurch gekennzeichnet, dass** das zum Verschluss (4) der Stirnkanten eingesetzte Material mit der durch Fluid-Hochdruckstrahlen verfestigten Seite an den Stirnkanten der Filterfalten befestigt ist und die beidseitig nach außen kragenden Randbereiche (5) sich etwa in Höhe der durch die Faltenrücken aufgespannten Ebene erstrecken, die durch die Fluid-Hochdruckstrahlen verfestigte Seite des Filtermaterials (3) gebildet wird.
